# EUROPEAN PATENT SPECIFICATION

(11) **EP 3 812 620 B1**
(45) Date of publication and mention of the grant of the patent: **07.09.2022**
(21) Application number: 20187159.7
(22) Date of filing: 22.07.2020
(51) Int. Cl.: F16H 9/18, C25D 3/04, F16H 55/44, F16H 55/56, F16H 57/00, F16D 1/072, B21D 39/00, B21D 39/06, B21D 53/84, B23P 11/00, C25D 5/02, F16H 1/20, F16H 37/02

(54) **METHOD FOR MANUFACTURING A PULLEY FOR A BELT-TYPE CONTINUOUSLY VARIABLE TRANSMISSION AND BELT-TYPE CONTINUOUSLY VARIABLE TRANSMISSION WITH SUCH A PULLEY**
VERFAHREN ZUR HERSTELLUNG EINER RIEMENSCHEIBE FÜR STUFENLOSES RIEMENGETRIEBE UND STUFENLOSES RIEMENGETRIEBE MIT SOLCHER RIEMENSCHEIBE
PROCÉDÉ DE FABRICATION D'UNE POULIE POUR UNE TRANSMISSION À VARIATION CONTINUE DE TYPE À COURROI ET TRANSMISSION À VARIATION CONTINUE DE TYPE À COURROIE EQUIPÉ D'UNE TELLE POULIE

(30) Priority: 21.10.2019 JP 2019191660
(43) Date of publication of application: 28.04.2021
(73) Proprietor: Yamaha Hatsudoki Kabushiki Kaisha, Shizuoka-ken 438-8501 (JP)
(72) Inventor: MASUI, Yasuto, Shizuoka-ken, 438-8501 (JP); FUJIKURA, Kyohei, Shizuoka-ken, 438-8501 (JP)
(74) Representative: Marks & Clerk LLP

(56) References cited:
- EP-A2- 1 760 365
- JP-A- 2010 236 647
- US-B2- 6 733 406

## Description

### FIELD OF INVENTION

The present invention relates to a belt-type continuously variable transmission and a method for manufacturing a pulley for a belt-type continuously variable transmission. The present invention also relates to a straddle-type vehicle or saddle-ride type vehicle, such as a vehicle comprising or including a belt-type continuously variable transmission according to the present invention.

### BACKGROUND TO INVENTION

A belt-type continuously variable transmission includes a primary pulley and a secondary pulley whose belt winding diameters are variable, and a belt wound around the primary pulley and the secondary pulley. The primary pulley includes a movable sheave and a fixed sheave supported on a primary shaft. The secondary pulley includes a movable sheave and a fixed sheave supported on a secondary shaft.

For example, Japanese Laid-Open Patent Publication No. 2010-236647 (HONDA MOTOR CO LTD) discloses such a belt-type continuously variable transmission. The belt-type continuously variable transmission disclosed in Japanese Laid-Open Patent Publication No. 2010-236647 includes a movable pulley support sleeve supported on the secondary shaft so as to be axially movable (hereinafter referred to as "movable boss"), a fixed pulley support sleeve supported on the secondary shaft so as to be axially unmovable (hereinafter referred to as "fixed boss"), a movable sheave joined to the movable boss, and a fixed sheave joined to the fixed boss. The movable sheave is welded to the movable boss, and the fixed sheave is welded to the fixed boss. That is, the sheave and the boss are fusion-bonded together. Now, depending on the combination of the materials of the boss and the sheave, the welding condition may be strict and it may be difficult to desirably weld together the sheave and the boss. Also, depending on the combination of the materials of the boss and the sheave, an additional process may be needed before or after welding together the sheave and the boss. This may incur an extra time and cost.

It is an object of the present invention to obviate or at least mitigate one or more problems or disadvantages in the prior art. The present invention provides a belt-type continuously variable transmission and a method for manufacturing a pulley for a belt-type continuously variable transmission, with which the sheave and the boss can be desirably joined together without welding.

### SUMMARY OF INVENTION

Various aspects of the present invention are defined in the independent claims appended hereto. Some optional and/or preferred features are defined in the dependent claims appended hereto.

According to a first aspect of the present invention there is provided a method for manufacturing a pulley for a belt-type continuously variable transmission (CVT). The method comprises the following steps: a step of preparing a cylindrical boss extending in a first direction; a step of forming a groove on an outer circumferential surface of the boss, wherein the groove may have a first surface crossing a first direction, a second surface crossing a second direction that may be an opposite direction to the first direction, a third surface crossing a third direction that may be a circumferential direction, and/or a fourth surface crossing a fourth direction that may be an opposite direction to the third direction; a step of preparing a sheave, wherein the sheave may include a proximal portion that has an inner circumferential surface and/or an outer circumferential surface and may extend in the first direction, and/or a main body portion that may be located radially outward relative to the proximal portion and may support a belt; a pre-press step of aligning the inner circumferential surface of the proximal portion of the sheave with the groove on the outer circumferential surface of the boss; and/or a step of pressing the outer circumferential surface of the proximal portion of the sheave toward a radially inward direction, thereby preferably plastically deforming the proximal portion until a portion of the proximal portion of the sheave may be fitted into the groove of the boss and/or the sheave may be joined to the boss.

According to the manufacturing method set forth above, the outer circumferential surface of the proximal portion of the sheave may be pressed toward the radially inward direction, thereby plastically deforming the proximal portion. Moreover, by suppressing plastic deformation to the sheave end surface, a portion of the proximal portion of the sheave may fill the groove of the boss, thus joining the sheave to the boss. Herein, the groove may have the first surface crossing the first direction and the second surface crossing the second direction. Therefore, the boss can sufficiently receive the load in the first direction and in the second direction of the sheave. Thus, the boss can sufficiently support the load in the axial direction of the sheave. The groove also may have the third surface crossing the third direction and the fourth surface crossing the fourth direction. Therefore, the boss can sufficiently receive the load in the third direction and in the fourth direction of the sheave. Thus, the boss can sufficiently support the load in the rotation direction of the sheave. According to the manufacturing method set forth above, there is beneficially no need to weld together the sheave and the boss. It can be possible to desirably join together the sheave and the boss without welding.

According to a preferred embodiment, the first surface may be a surface that extends toward the radially outward direction while extending in the first direction, the second surface may be a surface that extends toward the radially outward direction while extending in the second direction, the third surface may be a surface that extends toward the radially outward direction while extending in the third direction, and the fourth surface may be a surface that extends toward the radially outward direction while extending in the fourth direction.

When machining the first surface crossing the first direction, a surface that extends toward the radially outward direction while extending in the first direction (hereinafter referred to as "slope") can be machined more easily than a vertical surface that perpendicularly crosses the first direction. This similarly holds true for the second surface crossing the second direction, the third surface crossing the third direction, and the fourth surface crossing the fourth direction. According to the embodiment set forth above, since at least one of the first to fourth surfaces may be a slope, it may be possible to relatively easily form the groove.

According to a preferred embodiment, a hardness of a material of the boss may be harder than a hardness of a material of the sheave. According to a preferred embodiment, an elongation of a material of the sheave may be greater than an elongation of a material of the boss.

According to the embodiment set forth above, a portion of the proximal portion may be plastically deformed when the outer circumferential surface of the proximal portion of the sheave is pressed toward the radially inward direction, thereby making it easier for the sheave material to flow into the groove of the boss, and/or making it easier for the sheave to be joined to the boss. Moreover, by suppressing plastic deformation to the sheave end surface, it may be possible to more desirably join together the sheave and the boss.

According to a preferred embodiment, the groove may include a first groove that has the first surface and the second surface and may extend completely around the outer circumferential surface of the boss, and a plurality of second grooves that may have the third surface and the fourth surface and may be arranged in a circumferential direction.

According to the embodiment set forth above, it may be possible to relatively easily form the first groove. Since the first surface or the second surface may be formed across the entirety in the circumferential direction of the boss, it may be possible to ensure a relatively large area of the first surface or the second surface. Since a plurality of third surfaces and/or a plurality of fourth surfaces may be formed in the circumferential direction, it may be possible to ensure a relatively large overall area of the third surfaces and the fourth surfaces. Thus, the sheave can be firmly joined to the boss through plastic deformation of the proximal portion of the sheave.

According to a preferred embodiment, the groove may include a plurality of first grooves that have the first surface and the second surface and may be arranged in a circumferential direction, and a plurality of second grooves that may have the third surface and the fourth surface and may be arranged in a circumferential direction.

According to the embodiment set forth above, since a plurality of first surfaces and a plurality of second surfaces may be formed in the circumferential direction, it may be possible to ensure a relatively large overall area of the first surfaces and the second surfaces. Since a plurality of third surfaces and a plurality of fourth surfaces may be formed in the circumferential direction, it may be possible to ensure a relatively large overall area of the third surfaces and the fourth surfaces. Thus, the sheave can be firmly joined to the boss through plastic deformation of the proximal portion of the sheave.

According to a preferred embodiment, the second grooves may be open toward the second direction.

According to the embodiment set forth above, it may be possible to (easily) form the second grooves.

The first groove may be formed between a middle position of the boss in the first direction and the second grooves.

The first groove and the second grooves may be connected to each other.

According to a preferred embodiment, a length of each second groove in the first direction may be longer than a length of the first groove in the first direction.

According to the embodiment set forth above, it may be possible to ensure a relatively large area of the third surface and the fourth surface. Thus, the boss can sufficiently receive the load in the rotation direction of the sheave.

According to a preferred embodiment, a depth of the first groove may be deeper than a depth of each second groove.

According to the embodiment set forth above, it may be possible to ensure a relatively large area of the first surface and the second surface. Thus, the boss can sufficiently receive the load in the axial direction of the sheave.

According to a preferred embodiment, the method may include, after the step of forming the groove and before the pre-press step, a step of at least partially plating a portion of the outer circumferential surface other than the groove without plating an inside of the groove on the outer circumferential surface of the boss.

The grooves on the boss may have corner portions. If the outer circumferential surface of the boss is entirely plated, the current density may be high at the corner portions of the grooves during the plating step so that the corner portions may be more easily plated than other portions. As a result, the thickness of the plating film may be likely to be non-uniform. However, when the thickness of the plating film is non-uniform, when the proximal portion of the sheave is plastically deformed so as to flow into the grooves, the proximal portion may not smoothly flow into the inside of the grooves, thus inhibiting uniform plastic deformation. According to the embodiment set forth above, however, the inside of the grooves may not be plated. Therefore, a plastic deformation defect may not occur due to non-uniformity in the thickness of the plating film. Thus, the proximal portion of the sheave can be uniformly plastically deformed, and it may be possible to desirably join together the sheave and the boss. On the other hand, since portions, other than the grooves, of the outer circumferential surface of the boss may be plated, it may be possible to suppress friction of those portions.

According to a second aspect of the present invention there is provided a belt-type continuously variable transmission (CVT). The belt-type continuously variable transmission may comprise or including one or more of: a primary pulley which may be supported on a primary shaft, a secondary pulley which may be supported on a secondary shaft, and/or a belt which may be wound around the primary pulley and the secondary pulley. At least one of the primary pulley and the secondary pulley may have a cylindrical boss that may extend in a first direction and/or a sheave that may extend radially outward from the boss. A groove may be formed on an outer circumferential surface of the boss, wherein the groove may have one or more of: a first surface crossing the first direction, a second surface crossing a second direction that may be an opposite direction to the first direction, a third surface crossing a third direction that may be a circumferential direction, and a fourth surface crossing a fourth direction that may be an opposite direction to the third direction. The sheave may have a proximal portion that may extend in the first direction, and a main body portion that may be located radially outward relative to the proximal portion and may support the belt. The proximal portion of the sheave may comprise or include a plastically deformed portion that may be fitted into an inside of the groove of the boss. The sheave and the boss may be joined together through plastic deformation of the proximal portion of the sheave.

According to a preferred embodiment, the first surface may be a surface that may extend toward the radially outward direction while extending in the first direction, the second surface may be a surface that may extend toward the radially outward direction while extending in the second direction, the third surface may be a surface that may extend toward the radially outward direction while extending in the third direction, and/or the fourth surface may be a surface that may extend toward the radially outward direction while extending in the fourth direction.

According to a third aspect of the present invention there is provided a straddle-type vehicle comprising a belt-type continuously variable transmission (CVT) according to the second aspect of the present invention.

According to one or more embodiments of one or more aspects of the present invention, it is possible to provide a belt-type continuously variable transmission and a method for manufacturing a belt-type continuously variable transmission, with which the sheave and the boss can be desirably joined together without welding.

### BRIEF DESCRIPTION OF DRAWINGS

Embodiments of the present invention will now be described by way of example only, and with reference to the accompanying drawings, which are:
FIG. 1 a side view of a motorcycle including a belt-type continuously variable transmission according to an embodiment of the present invention;
FIG. 2 a cross-sectional view of a power unit;
FIG. 3 a cross-sectional view of a portion of the power unit;
FIG. 4 a perspective view of the distal portion of the boss of the secondary pulley;
FIG. 5 a partial enlarged view of the end surface of the boss;
FIG. 6 a cross-sectional view taken along line VI-VI of FIG. 5;
FIG. 7 a cross-sectional view taken along line VII-VII of FIG. 5;
FIG. 8 an enlarged view of the first groove, and is a longitudinal sectional view passing through the center line of the boss;
FIG. 9 an enlarged view of a second groove, and is a cross sectional view perpendicular to the center line of the boss;
FIG. 10 a longitudinal sectional view of the third sheave;
FIG. 11 a flow chart of a method for joining together the third sheave and the boss;
FIG. 12 a diagram illustrating the plastic deformation of the proximal portion of the third sheave into the first groove;
FIG. 13 a diagram illustrating the plastic deformation of the proximal portion of the third sheave into the first groove and the second groove;
FIG. 14A a cross-sectional view of jigs, the third sheave and the boss before the proximal portion of the third sheave is pressed;
FIG. 14B a cross-sectional view of jigs, the third sheave and the boss after the proximal portion of the third sheave is pressed; and
FIG. 15 a diagram equivalent to FIG. 5 according to another embodiment of the present invention.

### DETAILED DESCRIPTION OF EMBODIMENTS

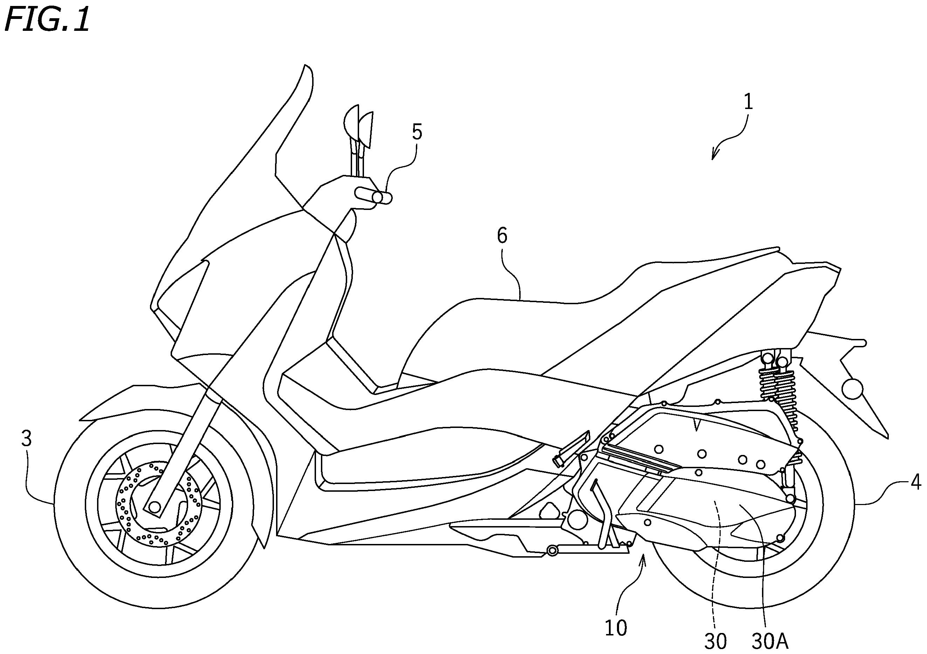

FIG. 1 illustrates a motorcycle 1 including a belt-type continuously variable transmission (hereinafter referred to as "CVT") 30 according to one embodiment. The motorcycle 1 includes a front wheel 3, a rear wheel 4, a power unit 10 for driving the rear wheel 4, a seat 6, and a handle 5. Herein, the motorcycle 1 is a scooter. Note however that there is no particular limitation thereto.

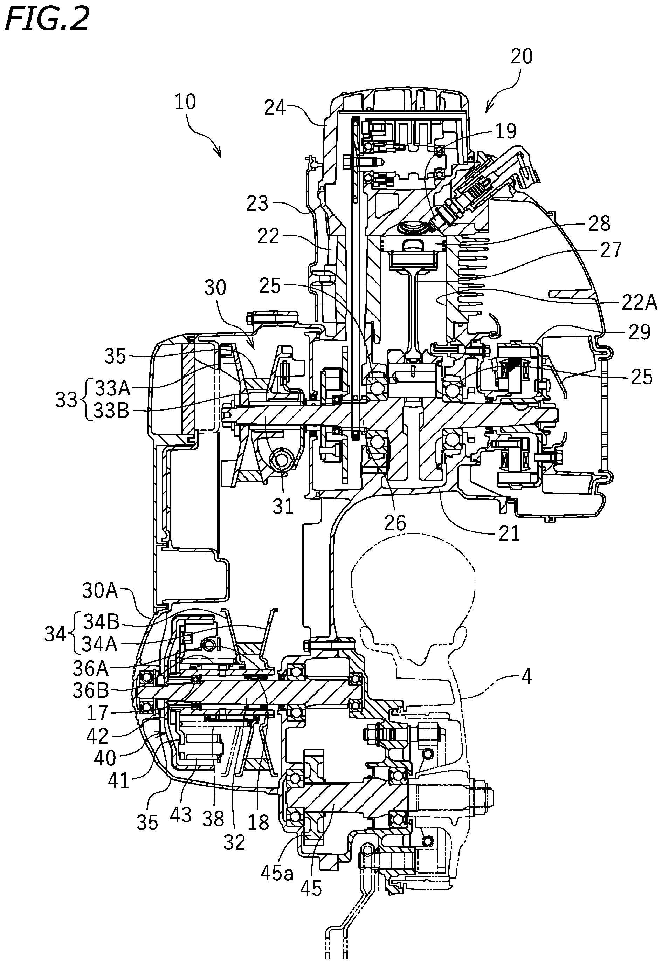

FIG. 2 is a cross-sectional view of the power unit 10. The power unit 10 includes an internal combustion engine (hereinafter referred to as "engine") 20 and a CVT 30.

The engine 20 includes a crankcase 21, a cylinder body 22 connected to the crankcase 21, a cylinder head 23 connected to the cylinder body 22, and a cylinder head cover 24 connected to the cylinder head 23. The engine 20 also includes a crankshaft 26 rotatably supported on the crankcase 21 with a bearing 25 therebetween, a connecting rod 27 linked to the crankshaft 26, a piston 28 linked to the connecting rod 27, and an ignition device 19. The piston 28 is arranged inside a cylinder 22A formed in the cylinder body 22. The crankshaft 26 extends in the vehicle width direction. A generator 29 is attached to the right end portion of the crankshaft 26. Although not shown in the figures, the cylinder head 23 is provided with an intake valve and an exhaust valve.

In the present embodiment, a primary shaft 31 is arranged leftward of the crankshaft 26. The crankshaft 26 and the primary shaft 31 are integral with each other. Note, however, that there is no particular limitation thereto. The primary shaft 31 may be separate from the crankshaft 26. The CVT 30 includes the primary shaft 31, a secondary shaft 32 parallel to the primary shaft 31, a primary pulley 33 supported on the primary shaft 31, a secondary pulley 34 supported on the secondary shaft 32, and a V belt 35 wound around the primary pulley 33 and the secondary pulley 34. The CVT 30 is arranged inside a transmission case 30A. In the present embodiment, the secondary shaft 32 is arranged rearward of the primary shaft 31, and the secondary pulley 34 is arranged rearward of the primary pulley 33.

The primary pulley 33 includes a first sheave 33A that is attached so as to be un-rotatable and axially un-movable relative to the primary shaft 31, and a second sheave 33B that is attached so as to be un-rotatable and axially movable relative to the primary shaft 31. The first sheave 33A and the second sheave 33B rotate together with the primary shaft 31. As the second sheave 33B moves in the axial direction, the gap between the first sheave 33A and the second sheave 33B changes. This changes the winding diameter of the V belt 35 around the primary pulley 33. Note that the primary pulley 33 and the V belt 35 are shown on the upper side and on the lower side of the primary shaft 31 of FIG. 2, with the second sheave 33B being at different positions.

The secondary pulley 34 includes a boss 36A that is supported so as to be rotatable and axially un-movable relative to the secondary shaft 32, a third sheave 34A joined to the boss 36A, a boss 36B supported so as to be rotatable and axially movable relative to the secondary shaft 32, and a fourth sheave 34B joined to the boss 36B. A bearing 17 and a bearing 18 are provided between the boss 36A and the secondary shaft 32. The boss 36A is rotatably supported on the secondary shaft 32 via the bearing 17 and the bearing 18. The boss 36B is attached so as to be unrotatable and axially movable relative to the boss 36A. The boss 36B rotates together with the boss 36A. Although the details will be described later, the third sheave 34A and the boss 36A are joined together through plastic deformation of the third sheave 34A. The fourth sheave 34B and the boss 36B are joined together through plastic deformation of the fourth sheave 34B.

The third sheave 34A and the fourth sheave 34B rotate together with the boss 36A and the boss 36B. As the fourth sheave 34B moves in the axial direction, the gap between the third sheave 34A and the fourth sheave 34B changes. This changes the winding diameter of the V belt 35 around the secondary pulley 34. Note that the secondary pulley 34 and the V belt 35 are shown on the upper side and on the lower side of the secondary shaft 32 of FIG. 2, with the fourth sheave 34B being at different positions.

The CVT 30 includes a spring 38 that urges the fourth sheave 34B toward the third sheave 34A. The spring 38 urges the fourth sheave 34B rightward.

A centrifugal clutch 40 is provided at the left end portion of the secondary shaft 32. A driving portion 41 of the centrifugal clutch 40 is fixed to the boss 36A and rotates together with the boss 36A. A driven portion 42 of the centrifugal clutch 40 is fixed to the secondary shaft 32 and rotates together with the secondary shaft 32. When the rotation speed of the driving portion 41 becomes greater than or equal to a predetermined rotation speed, a centrifugal weight 43 provided on the driving portion 41 moves radially outward of the secondary shaft 32, thereby connecting together the driving portion 41 and the driven portion 42. That is, the centrifugal clutch 40 is connected. On the other hand, when the rotation speed of the driving portion 41 is less than the predetermined rotation speed, the connection between the driving portion 41 and the driven portion 42 is disengaged. That is, the centrifugal clutch 40 is disconnected. When the centrifugal clutch 40 is connected, the rotational force of the boss 36A is transmitted to the secondary shaft 32, and the secondary pulley 34 and the secondary shaft 32 rotate together. When the centrifugal clutch 40 is disconnected, the rotational force from the boss 36A to the secondary shaft 32 is blocked, and the secondary pulley 34 rotates relative to the secondary shaft 32.

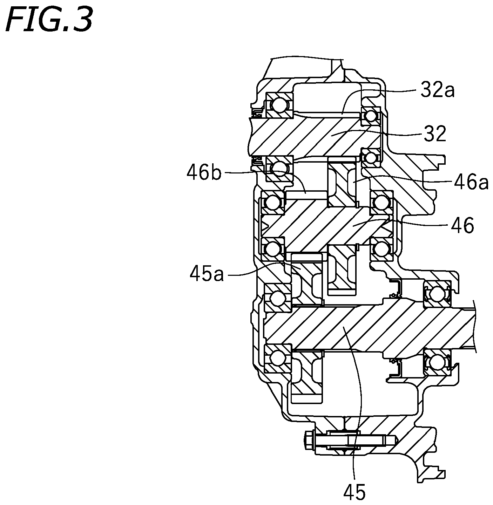

The power unit 10 includes an output shaft 45 parallel to the secondary shaft 32. The rear wheel 4 is linked to the output shaft 45. As shown in FIG. 3, a middle shaft 46 is arranged between the secondary shaft 32 and the output shaft 45. The secondary shaft 32 is formed with a gear 32a, and the middle shaft 46 is provided with a gear 46a that meshes with the gear 32a. The middle shaft 46 is formed with a gear 46b, and the output shaft 45 is provided with a gear 45a that meshes with the gear 46b. Thus, the secondary shaft 32 is linked to the middle shaft 46 via the gear 32a and the gear 46a, and the middle shaft 46 is linked to the output shaft 45 via the gear 46b and the gear 45a. Therefore, the rotational force of the secondary shaft 32 is transmitted to the output shaft 45, and the rotational force is transmitted from the output shaft 45 to the rear wheel 4.

The power unit 10 is configured as described above. As described above, the secondary pulley 34 of the CVT 30 is formed by joining together the third sheave 34A and the boss 36A through plastic deformation of the third sheave 34A, and joining together the fourth sheave 34B and the boss 36B through plastic deformation of the fourth sheave 34B. Next, the boss 36A and the third sheave 34A before being joined together will be described.

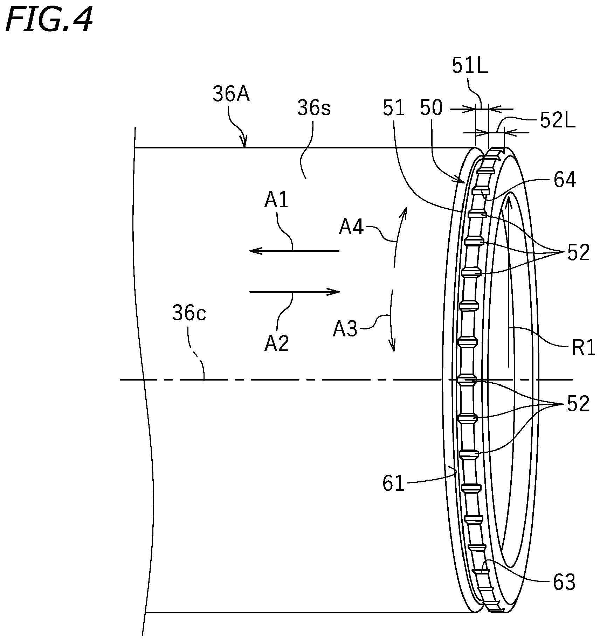

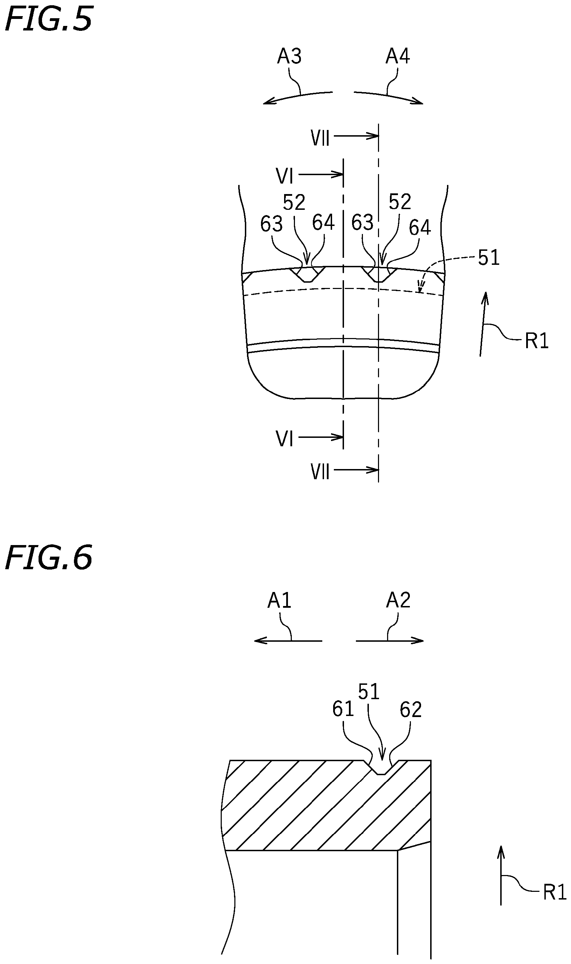

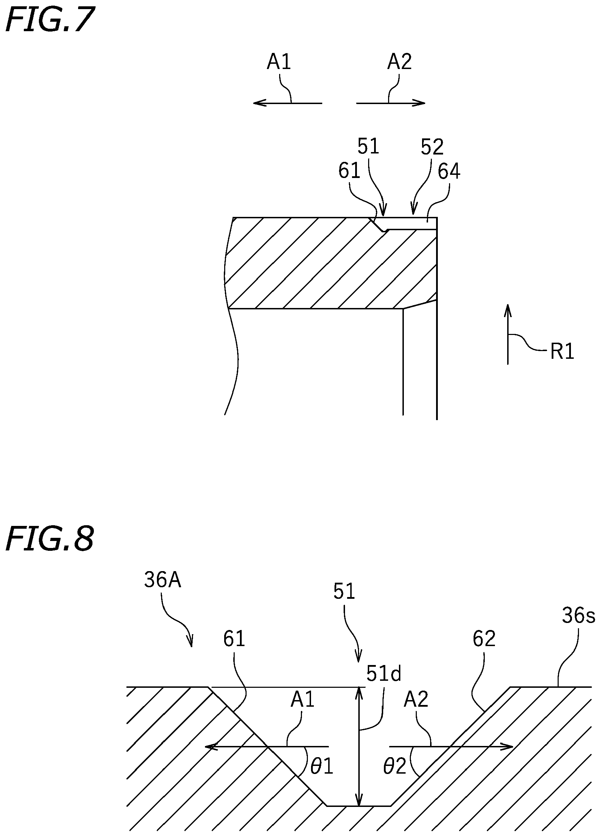

FIG. 4 is a perspective view of the distal portion of the boss 36A before the third sheave 34A is joined thereto. FIG. 5 is a partial enlarged view of the end surface of the boss 36A. That is, FIG. 5 is a partial enlarged view as the boss 36A is seen from the right side. FIG. 6 is a cross-sectional view taken along line VI-VI of FIG. 5, and FIG. 7 is a cross-sectional view taken along line VII-VII of FIG. 5. In the following description, the directions represented by arrows A1, A2, A3 and A4 will be referred to as the first direction, the second direction, the third direction and the fourth direction, respectively. As shown in FIG. 4, the first direction A1 is the direction in which the boss 36A extends. The second direction A2 is the opposite direction to the first direction A1. The third direction A3 is a circumferential direction of the boss 36A. The fourth direction A4 is the opposite direction to the third direction A3. The reference sign 36c denotes the center line of the boss 36A. The reference sign R1 denotes radially outward of the boss 36A.

As shown in FIG. 4, the distal portion of the boss 36A is formed with a groove 50. The groove 50 includes a first groove 51 that extends completely around an outer circumferential surface 36s of the boss 36A, and a plurality of second grooves 52 arranged in the circumferential direction.

As shown in FIG. 6, the first groove 51 includes a first surface 61 crossing the first direction A1, and a second surface 62 crossing the second direction A2. Although the first surface 61 may perpendicularly cross the first direction A1, it herein slantly (obliquely) crosses the first direction A1. The first surface 61 is a surface that extends toward the radially outward direction R1 while extending in the first direction A1, and is a slope that is inclined from the first direction A1. Similarly, although the second surface 62 may perpendicularly cross the second direction A2, it herein slantly (obliquely) crosses the second direction A2. The second surface 62 is a surface that extends toward the radially outward direction R1 while extending in the second direction A2, and is a slope that is inclined from the second direction A2. In the present embodiment, the first surface 61 and the second surface 62 each extend completely around a center line 36c of the boss 36A. Note, however, that there is no particular limitation thereto. The first surface 61 and the second surface 62 may be formed intermittently around the center line 36c.

As shown in FIG. 8, on a longitudinal section passing through the center line 36c of the boss 36A, the angle θ1 formed between the first direction A1 and the first surface 61 may be equal to, or different from, the angle θ2 formed between the second direction A2 and the second surface 62. While there is no particular limitation on the angles θ1 and θ2, such may be in the range of 40° to 50° or in the range of 30° to 60°, for example. In the present embodiment, θ1=θ2=47.5°.

As shown in FIG. 5, the second groove 52 includes a third surface 63 crossing the third direction A3, and a fourth surface 64 crossing the fourth direction A4. Although the third surface 63 may perpendicularly cross the third direction A3, it herein slantly (obliquely) crosses the third direction A3. The third surface 63 is a surface that extends toward the radially outward direction R1 while extending in the third direction A3, and is a slope that is inclined from the third direction A3. Similarly, although the fourth surface 64 may perpendicularly cross the fourth direction A4, it herein slantly (obliquely) crosses the fourth direction A4. The fourth surface 64 is a surface that extends toward the radially outward direction R1 while extending in the fourth direction A4, and is a slope that is inclined from the fourth direction A4.

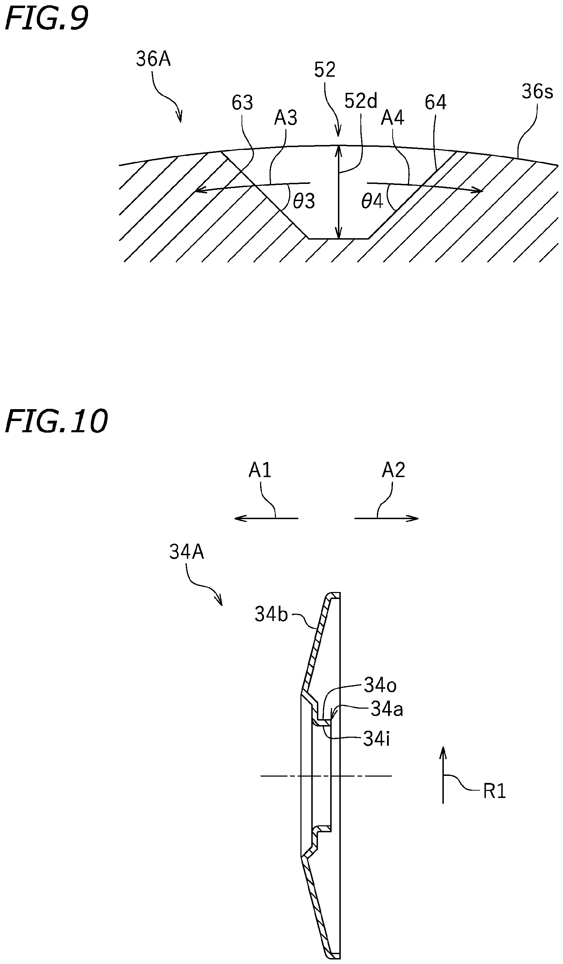

As shown in FIG. 9, on a cross-section perpendicular to the center line 36c of the boss 36A, the angle θ3 formed between the third direction A3 and the third surface 63 and the angle θ4 formed between the fourth direction A4 and the fourth surface 64 may be equal to each other or different from each other. While there is no particular limitation on the angles θ3 and θ4, such may be in the range of 40° to 50° or in the range of 30° to 60°, for example. In the present embodiment, θ3=θ4=45°. The angles θ1 to θ4 may be all equal. Any one of the angles θ1 to θ4 may be different from any other one or ones of the angles θ1 to θ4. The angles θ1 to θ4 may all be different angles.

In the present embodiment, the depth 51d of the first groove 51 (see FIG. 8) is deeper than the depth 52d of each second groove 52 (see FIG. 9). 51d>52d. Note, however, that there is no limitation thereto. It may be 51d=52d or may be 51d<52d. Note that the depth 51d of the first groove 51 and the depth 52d of each second groove 52 are set based on the thrust load, for example. Herein, the thrust load corresponds to the load in the direction A1 or A2 in the figures.

As shown in FIG. 4, the second grooves 52 are formed closer to the distal end of the boss 36A relative to the first groove 51. The first groove 51 is formed between the middle position of the boss 36A in the first direction A1 and the second grooves 52.

As shown in FIG. 7, in the present embodiment, the first groove 51 and the second grooves 52 are connected to each other. The first groove 51 and the second grooves 52 are continuous with each other. Note, however, that there is no limitation thereto. The first groove 51 and the second grooves 52 may be separate from each other.

As shown in FIG. 4 and FIG. 7, the second grooves 52 are formed at the distal end of the boss 36A. The second grooves 52 are open toward the second direction A2. Also, since the second grooves 52 are connected to the first groove 51, such are open toward the first direction A1. Note, however, that there is no limitation thereto.

As shown in FIG. 4, the length 52L of each second groove 52 in the first direction A1 is longer than the length 51L of the first groove 51 in the first direction A1. 51L<52L. Note, however, that there is no limitation thereto. It may be 51L=52L or may be 51L>52L. Note that the length 51L of the first groove 51 and the length 52L of each second groove 52 are set based on the torque load, for example. Herein, the torque load corresponds to the load in the direction A3 or A4 in the figures.

FIG. 10 is a longitudinal sectional view of the third sheave 34A before being joined. The third sheave 34A includes a proximal portion 34a extending in the first direction A1, and a main body portion 34b located radially outward R1 relative to the proximal portion 34a. The proximal portion 34a is formed in a tubular shape, and has an inner circumferential surface 34i and an outer circumferential surface 34o. The main body portion 34b is formed integral with the proximal portion 34a, and extends radially outward R1 from the proximal portion 34a. A portion of the main body portion 34b is inclined from the radial direction so as to extend toward the second direction A2 while extending radially outward R1. This portion of the main body portion 34b is a portion that is to be in contact with the V belt 35 and is a portion that supports the V belt 35 (see FIG. 2).

Although there is no particular limitation on the materials of the boss 36A and the third sheave 34A, the material of the boss 36A is S35C (carbon steel for machine structure) and the material of the third sheave 34A is SPCC (cold rolled steel plate) in the present embodiment. The hardness of the material of the boss 36A is harder than the hardness of the material of the third sheave 34A. Note that the "hardness of the material of the boss" as used in the present specification refers to the hardness of the material (S35C in the present embodiment) of the boss. Where the boss is subjected to a surface treatment, the "hardness of the material of the boss" refers to the hardness of the material of the boss but not the hardness of the surface after the surface treatment. Similarly, the "hardness of the material of the sheave" refers to the hardness of the material (SPCC in the present embodiment) of the sheave. Where the sheave is subjected to a surface treatment, the "hardness of the material of the sheave" refers to the hardness of the material of the sheave but not the hardness of the surface after the surface treatment. Note that the "hardness" is herein assumed to mean Rockwell hardness. Note, however, that the "hardness" is not limited to Rockwell hardness. For example, the "hardness" may be Vickers hardness. The materials and the hardness described above are merely illustrative and there is no particular limitation thereto.

In the present embodiment, the elongation of the material of the third sheave 34A is greater than the elongation of the material of the boss 36A. Note that the "elongation" is the rate of change between the initial length and the length upon fracture. Where L0 denotes the initial length and Lf denotes the length upon fracture, the elongation δ is expressed as δ=[(Lf-L0)/L0]×100(%). In the present specification, "the elongation of the material of the sheave" and "the elongation of the material of the boss" refer respectively to the elongation of the material (SPCC in the present embodiment) of the sheave and the elongation of the material (S35C in the present embodiment) of the boss.

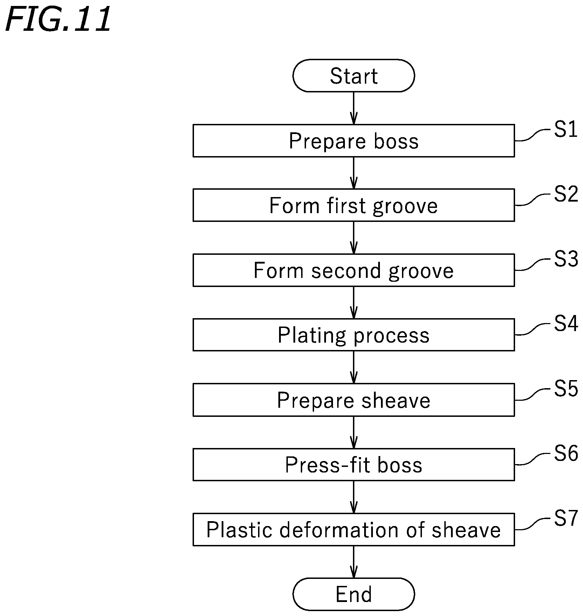

Next, referring to the flow chart of FIG. 11, a method for joining together the third sheave 34A and the boss 36A will be described.

First, a cylindrical boss 36A is prepared (step S1). Then, the first groove 51 described above is formed on the outer circumferential surface 36s of the distal portion of the boss 36A (step S2). Then, the second grooves 52 described above are formed on the outer circumferential surface 36s of the distal portion of the boss 36A (step S3). Thus, the boss 36A (see FIG. 4) is obtained, which is formed with the first groove 51 and the second grooves 52 on the distal portion thereof. Note that there is no particular limitation on the method for machining the first groove 51 and the second grooves 52. In the present embodiment, the first groove 51 is formed by a cutting process. The second grooves 52 are formed by a rolling knurl process.

Then, after the boss 36A is subjected to induction hardening, a surface polishing process is performed. Thereafter, portions of the boss 36A where the first groove 51 and the second grooves 52 are formed are masked, and the other portions of the boss 36A are subjected to a plating process (step S4). In the present embodiment, a chromium plating process is performed. Thereafter, a polishing process is performed again.

Before or after steps S1 to S4, or simultaneously with steps S1 to S4, the third sheave 34A is prepared (step S5).

Then, a pre-press step of step S6 is performed. In the pre-press step, the distal portion of the boss 36A is press-fitted into the proximal portion 34a of the third sheave 34A (see FIG. 10). Thus, the inner circumferential surface 34i of the proximal portion 34a is aligned with the first groove 51 and the second grooves 52.

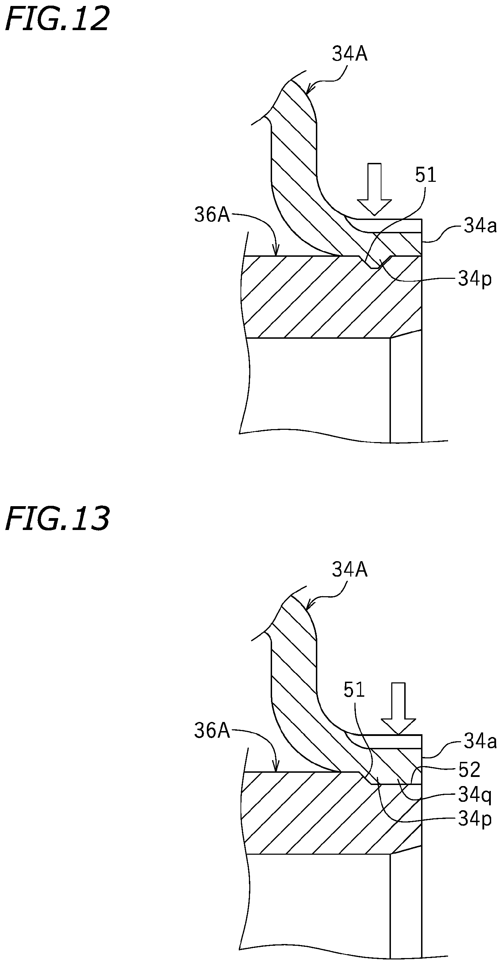

Then, the outer circumferential surface 34o of the proximal portion 34a of the third sheave 34A is pressed toward the radially inward direction, thereby plastically deforming the proximal portion 34a (step S7). That is, the outer circumferential surface 34o of the proximal portion 34a of the third sheave 34A is pressed toward the radially inward direction until a portion of the proximal portion 34a of the third sheave 34A is fitted into the first groove 51 and the second grooves 52 of the boss 36A and the third sheave 34A is joined to the boss 36A. Thus, as shown in FIG. 12, the proximal portion 34a of the third sheave 34A plastically deforms, and a portion of the proximal portion 34a flows into the first groove 51 of the boss 36A. The third sheave 34A then has a first plastically deformed portion 34p that is located in the first groove 51. As shown in FIG. 13, the proximal portion 34a of the sheave 34A plastically deforms, and another portion of the proximal portion 34a flows into the second groove 52 of the boss 36A. The second sheave 34A then has a second plastically deformed portion 34q that is located in the second groove 52.

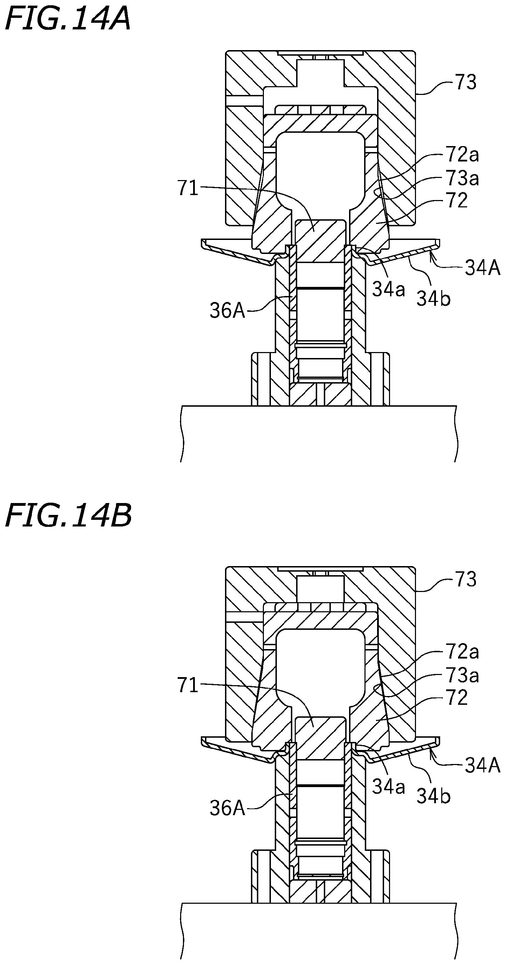

Note that a jig may be used when plastically deforming the proximal portion 34a of the third sheave 34A. For example, as shown in FIG. 14A, a first jig 71 that is inserted into the distal portion of the boss 36A, a second jig 72 that presses the outer circumferential surface 34o of the proximal portion 34a of the third sheave 34A in the radially inward direction, and a third jig 73 that is fitted into the second jig 72 so that it can slide up and down may be used. An outer circumferential surface 72a that is inclined from the vertical direction so as to extend radially outward while extending downward is formed in the lower portion of the second jig 72. An inner circumferential surface 73a that is inclined from the vertical direction so as to extend radially outward while extending downward is formed in the lower portion of the third jig 73. As the third jig 73 is moved downward, the inner circumferential surface 73a of the third jig 73 and the outer circumferential surface 72a of the second jig 72 come into contact with each other, and the lower portion of the second jig 72 is pushed by the third jig 73 in the radially inward direction. As a result, the lower portion of the second jig 72 presses the proximal portion 34a of the third sheave 34A in the radially inward direction. The proximal portion 34a of the third sheave 34A and the distal portion of the boss 36A are sandwiched between the first jig 71 and the second jig 72, and the proximal portion 34a of the third sheave 34A plastically deforms. By using such first to third jigs 71 to 73, for example, the third sheave 34A and the boss 36A can be joined simply and inexpensively.

As described above, the third sheave 34A and the boss 36A are joined together. Note that although detailed description is omitted, the fourth sheave 34B and the boss 36B are joined together in a similar manner. As with the boss 36A, the boss 36B is also formed with the first groove 51 and the second grooves 52. As the proximal portion of the fourth sheave 34B is pressed in the radially inward direction, a portion of the proximal portion of the fourth sheave 34B plastically deforms to flow into the first groove 51 and the second grooves 52, thus joining together the fourth sheave 34B and the boss 36B.

The step of joining together the third sheave 34A and the boss 36A and the step of joining together the fourth sheave 34B and the boss 36B are a part of the CVT 30 manufacturing process. Methods for manufacturing the CVT 30 include those in which the third sheave 34A and the boss 36A are joined together and those in which the fourth sheave 34B and the boss 36B are joined together.

As described above, according to the present embodiment, there is no need to weld together the third sheave 34A and the boss 36A. Therefore, materials that are difficult to weld together can be used as the materials of the third sheave 34A and the boss 36A. Since there is no need for welding, it is possible to inexpensively join together the third sheave 34A and the boss 36A.

Now, the boss 36A receives a load in the first direction A1 and a load in the second direction A2 of the third sheave 34A. In the present embodiment, the first groove 51 is formed on the boss 36A. The third sheave 34A includes the first plastically deformed portion 34p that is located in the first groove 51. Herein, the first groove 51 has the first surface 61 crossing the first direction A1. Therefore, the boss 36A can sufficiently receive the load in the first direction A1 of the third sheave 34A. The first groove 51 includes the second surface 62 crossing the second direction A2. Therefore, the boss 36A can sufficiently receive the load in the second direction A2 of the third sheave 34A. Therefore, the boss 36A can sufficiently support the load in the axial direction of the third sheave 34A.

The boss 36A receives a load in the third direction A3 and a load in the fourth direction A4 of the third sheave 34A. In the present embodiment, the boss 36A is formed with the second grooves 52. The third sheave 34A includes the second plastically deformed portion 34q that is located in the second groove 52. Herein, the second groove 52 has the third surface 63 crossing the third direction A3. Therefore, the boss 36A can sufficiently receive the load in the third direction A3 of the third sheave 34A. The second groove 52 includes the fourth surface 64 crossing the fourth direction A4. Therefore, the boss 36A can sufficiently receive the load in the fourth direction A4 of the third sheave 34A. Therefore, the boss 36A can sufficiently support the load in the rotation direction of the third sheave 34A.

Therefore, according to the present embodiment and the present invention, the third sheave 34A and the boss 36A can be desirably joined together without welding together the third sheave 34A and the boss 36A.

In the present embodiment, the first surface 61 is a surface that extends toward the radially outward direction R1 while extending in the first direction A1. The second surface 62 is a surface that extends in the radially outward direction R1 while extending in the second direction A2. The third surface 63 is a surface that extends in the radially outward direction R1 while extending in the third direction A3. The fourth surface 64 is a surface that extends in the radially outward direction R1 while extending in the fourth direction A4. Therefore, it is possible to relatively easily form the first groove 51 and the second grooves 52.

In the present embodiment, the hardness of the material of the boss 36A is harder than the hardness of the material of the third sheave 34A. The elongation of the material of the third sheave 34A is greater than the elongation of the material of the boss 36A. Therefore, when joining together the third sheave 34A and the boss 36A, it is easier to plastically deform the proximal portion 34a of the third sheave 34A. A portion of the proximal portion 34a of the third sheave 34A is plastically deformed when the outer circumferential surface 34o of the proximal portion 34a of the third sheave 34A is pressed toward the radially inward direction, thereby making it easier to flow into the first groove 51 and the second grooves 52 of the boss 36A. Therefore, it is possible to desirably join together the third sheave 34A and the boss 36A.

According to the present embodiment, the first groove 51 extends completely around the outer circumferential surface 36s of the boss 36A. It is possible to relatively easily form the first groove 51. The first surface 61 and the second surface 62 are formed across the entirety in the circumferential direction of the boss 36A. Therefore, it is possible to ensure a relatively large area of the first surface 61 and the second surface 62. Therefore, the boss 36A can sufficiently support the load in the axial direction of the third sheave 34A. A plurality of second grooves 52 are arranged in the circumferential direction. A plurality of third surfaces 63 and a plurality of fourth surfaces 64 are formed in the circumferential direction. Therefore, it is possible to ensure a relatively large overall area of the third surfaces 63 and the fourth surfaces 64. Thus, the boss 36A can sufficiently support the load in the rotation direction of the sheave 34A. According to the present embodiment, the sheave 34A is plastically deformed, thereby making it possible to firmly join the sheave 34A to the boss 36A.

According to the present embodiment, the second grooves 52 are open toward the second direction A2. Therefore, it is possible to easily form the second grooves 52. The second grooves 52 are connected to the first groove 51, and the second grooves 52 are open toward the first direction A1. This also makes it possible to easily form the second grooves 52.

According to the present embodiment, the length 52L of each second groove 52 in the first direction A1 is longer than the length 51L in the first direction A1 of the first groove 51. 52L>51L (see FIG. 4). Since the length 52L of each second groove 52 in the first direction A1 is relatively long, it is possible to ensure a relatively large area of the third surface 63 and the fourth surface 64. Therefore, the boss 36A can sufficiently support the load in the rotation direction of the third sheave 34A.

According to the present embodiment, the depth 51d of the first groove 51 (see FIG. 8) is deeper than the depth 52d of each second groove 52 (see FIG. 9). 51d>52d. Since the depth 51d of the first groove 51 is relatively deep, it is possible to ensure a relatively large area of the first surface 61 and the second surface 62. The boss 36A can sufficiently support the load in the axial direction of the third sheave 34A.

Now, the first groove 51 and the second grooves 52 have corner portions. In the plating process (see step S4), if the outer circumferential surface 36s of the boss 36A is entirely subjected to a plating process, the current density is high at the corner portions of the first groove 51 and the second grooves 52 so that the corner portions are more easily plated than other portions. As a result, the thickness of the plating film is likely to be non-uniform. However, when the thickness of the plating film is non-uniform, when the proximal portion 34a of the third sheave 34A is plastically deformed so as to flow into the first groove 51 and the second grooves 52, the proximal portion 34a may not smoothly flow into the inside of the first groove 51 and the second grooves 52, thus inhibiting uniform plastic deformation. According to the present embodiment, however, the first groove 51 and the second grooves 52 are masked during the plating process, and the inside of the first groove 51 and the inside of the second grooves 52 are not plated. Therefore, a plastic deformation defect does not occur due to non-uniformity in the thickness of the plating film. Thus, the proximal portion 34a of the third sheave 34A can be uniformly plastically deformed, and it is possible to desirably join together the third sheave 34A and the boss 36A. On the other hand, since portions, other than the first groove 51 and the second grooves 52, of the outer circumferential surface 36s of the boss 36A are plated, it is possible to suppress friction of those portions while the CVT 30 is in operation.

As described above, according to the present embodiment and the present invention, the third sheave 34A and the boss 36A are joined together through plastic deformation of the third sheave 34A without welding together the third sheave 34A and the boss 36A. Therefore, before joining together the third sheave 34A and the boss 36A, only the third sheave 34A can be subjected to a heat treatment, etc., and only the boss 36A can be subjected to a heat treatment, etc. Thus, as compared with a case where the third sheave 34A and the boss 36A are welded together, the process to be performed on the third sheave 34A and the boss 36A is easier.

Note that the effects described above can similarly be achieved also for the fourth sheave 34B and the boss 36B.

While one embodiment has been described above, the embodiment is merely an example. Various other embodiments are possible. Next, examples of other embodiments will be briefly described.

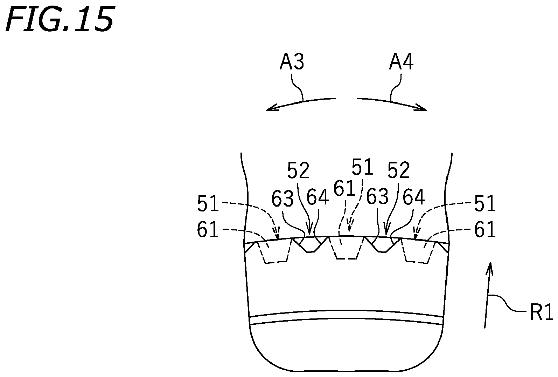

While the first groove 51 extends completely around the outer circumferential surface 36s of the boss 36A in the embodiment described above, there is no particular limitation on the shape of the first groove 51. For example, as shown in FIG. 15, a plurality of first grooves 51 may be arranged in the circumferential direction of the boss 36A. The boss 36A may include a plurality of first grooves 51 having the first surface 61 and the second surface 62, extending in the circumferential direction and arranged in the circumferential direction, and a plurality of second grooves 52 having the third surface 63 and the fourth surface 64, extending in the first direction A1 and arranged in the circumferential direction.

While the first groove 51 and the second grooves 52 are continuous with each other in the embodiment described above, the first groove 51 and the second grooves 52 do not need to be continues with each other as shown in FIG. 15, for example. The first groove 51 and the second grooves 52 may be separate from each other.

In the embodiment described above, the first surface 61 and the second surface 62 are provided on the first groove 51, and the third surface 63 and the fourth surface 64 are provided on the second grooves 52. The groove 50 formed on the boss 36A includes the first groove 51 and the second grooves 52, which have different shapes. However, there is no particular limitation on the shape of the groove 50 of the boss 36A. For example, a plurality of grooves of the same shape may be formed on the boss 36A. The boss 36A may include a plurality of grooves having the first to fourth surfaces 61 to 64 and formed in the circumferential direction.

The first surface 61 may be a surface that is perpendicular to the first direction A1. Similarly, the second surface 62 may be a surface that is perpendicular to the second direction A2. The third surface 63 may be a surface that is perpendicular to the third direction A3. The fourth surface 64 may be a surface that is perpendicular to the fourth direction A4.

In the embodiment described above, the second grooves 52 do not need to be open toward the first direction A1. The second grooves 52 may have the first surface 61 crossing the first direction A1. The second grooves 52 do not need to be open toward the second direction A2. The second grooves 52 may have the second surface 62 crossing the second direction A2.

While the first groove 51 is formed between the middle position of the boss 36A in the first direction A1 and the second grooves 52 in the embodiment described above, the first groove 51 may be formed closer to the distal end of the boss 36A relative to the second grooves 52. The second grooves 52 may be formed between the middle position of the boss 36A in the first direction A1 and the first groove 51.

The length 52L of each second groove 52 in the first direction A1 does not always need to be longer than the length 51L of the first groove 51 in the first direction A1. It may be 52L=51L or may be 52L<51L.

The depth 51d of the first groove 51 does not always need to be deeper than the depth 52d of each second groove 52. It may be 51d=52d or may be 51d<52d.

Where a relatively uniform plating film can be formed on the first groove 51 and the second grooves 52, the first groove 51 and the second grooves 52 do not need to be masked during the plating process.

While the second grooves 52 are formed by a knurl process in the embodiment described above, there is no particular limitation on the method for machining the second grooves 52.

While the boss 36A is subjected to a plating process in the embodiment described above, there is no particular limitation thereto. Depending on the material of the boss 36A, there may be no plating process.

While the second grooves 52 are formed after the first groove 51 is formed in the embodiment described above, the order is not limited to this. The first groove 51 may be formed after the second grooves 52 are formed. Alternatively, the first groove 51 and the second grooves 52 may be formed simultaneously.

The embodiment described above is an embodiment where the method for joining together the sheave and the boss through plastic deformation of the proximal portion of the sheave is applied to the secondary pulley 34. Note, however, that the application of the joining method is not limited to the secondary pulley 34. The joining method can be applied to the primary pulley 33.

A motorcycle on which the CVT 30 is installed may be a type of a motorcycle other than a scooter. The CVT 30 may be installed on a vehicle other than a motorcycle. The CVT 30 may be any other straddled vehicle such as an auto tricycle, an ATV (All Terrain Vehicle), and the like. Note that a straddled vehicle refers to a vehicle that is straddled by a passenger. The CVT 30 may be installed on a vehicle other than a straddled vehicle.

It will be appreciated that the embodiments of the present invention hereinbefore described are given by way of example only, and are not intended to limit the scope of the invention in any way. The steps of the method of the present invention may be carried out in the sequence presented or claimed or in any other suitable sequence.

It will be appreciated that the term "straddle-type" vehicle or motor vehicle used herein, and as used in the art, is meant to include at least the following terms also used in the art:
straddled vehicle, saddle-ride vehicle, saddle-straddling type vehicle, and includes: motorcycles and motorbikes as well as motor tricycles, quad bikes, All Terrain Vehicles (ATVs), scooters, mopeds and snowmobiles.

### REFERENCE SIGNS LIST

30: Belt-type continuously variable transmission, 33: Primary pulley, 34: Secondary pulley, 34A: Third sheave, 34a: Proximal portion, 34b: Main body portion, 34i: Inner circumferential surface of proximal portion, 34o: Outer circumferential surface of proximal portion, 36A: Boss, 36s: Outer circumferential surface of boss, 50: Groove, 51: First groove, 52: Second groove, 61: First surface, 62: Second surface, 63: Third surface, 64: Fourth surface.

## Claims

1. A method for manufacturing a pulley for a belt-type continuously variable transmission, the method comprising:
a step (S1) of preparing a cylindrical boss (36A) extending in a first direction (A1);
a step (S2, S3) of forming a groove (50) on an outer circumferential surface (36s) of the boss (36A), wherein the groove (50) has a first surface (61) that is a slope inclined from the first direction (A1), a second surface (62) that is a slope inclined from a second direction (A2), wherein the second direction (A2) is an opposite direction to the first direction (A1), a third surface (63) that is a slope inclined from a third direction (A3), wherein the third direction (A3) is a circumferential direction along a circumferential surface of the boss, and a fourth surface (64) that is a slope inclined from a fourth direction (A4), wherein the fourth direction (A4) is an opposite direction to the third direction (A3);
a step (S5) of preparing a sheave (34A), wherein the sheave (34A) comprises a proximal portion (34a) that has an inner circumferential surface (34i) and an outer circumferential surface (34o) and extends in the first direction (A1), and a main body portion (34b) that is located radially outward (R1) relative to the proximal portion (34a) and configured to support a belt (35);
a pre-press step (S6) of aligning the inner circumferential surface (34i) of the proximal portion (34a) of the sheave (34A) with the groove (50) on the outer circumferential surface (36s) of the boss (36A); and
a step (S7) of pressing the outer circumferential surface (34o) of the proximal portion (34a) of the sheave (34A) toward a radially inward direction, thereby plastically deforming the proximal portion (34a) until a portion of the proximal portion (34a) of the sheave (34A) is fitted into the groove (50) of the boss (36A) and the sheave (34A) is joined to the boss (36A).

2. The method for manufacturing a pulley for a belt-type continuously variable transmission according to
claim 1, wherein the first surface (61) is a surface that extends toward the radially outward direction (R1) relative to the boss while extending in the first direction (A1), the second surface (62) is a surface that extends toward the radially outward direction (R1) while extending in the second direction (A2), the third surface (63) is a surface that extends toward the radially outward direction (R1) while extending in the third direction (A3), and the fourth surface (64) is a surface that extends toward the radially outward direction (R1) while extending in the fourth direction (A4).

3. The method for manufacturing a pulley for a belt-type continuously variable transmission according to
claim 1 or 2, wherein a hardness of the boss (36A) is harder than a hardness of the sheave (34A).

4. The method for manufacturing a pulley for a belt-type continuously variable transmission according to
any one of claims 1 to 3, wherein an elongation of a material of the sheave (34A) is greater than an elongation of a material of the boss (36A).

5. The method for manufacturing a pulley for a belt-type continuously variable transmission according to
any one of claims 1 to 4, wherein the groove (50) comprises a first groove (51) that has the first surface (61) and the second surface (62) and extends completely around the outer circumferential surface (36s) of the boss (36A), and a plurality of second grooves (52) that have the third surface (63) and the fourth surface (64) and are arranged in a circumferential direction along the circumferential surface of the boss.

6. The method for manufacturing a pulley for a belt-type continuously variable transmission according to
any one of claims 1 to 4, wherein the groove (50) comprises a plurality of first grooves (51) that have the first surface (61) and the second surface (62) and are arranged in a circumferential direction, and a plurality of second grooves (52) that have the third surface (63) and the fourth surface (64) and are arranged in a circumferential direction along the circumferential surface of the boss.

7. The method for manufacturing a pulley for a belt-type continuously variable transmission according to
either of claims 5 or 6, wherein the second grooves (52) are open toward the second direction (A2).

8. The method for manufacturing a pulley for a belt-type continuously variable transmission according to
any one of claims 5 to 7, wherein the first groove (51) is formed between a middle position of the boss (36A) in the first direction (A1) and the second grooves (52).

9. The method for manufacturing a pulley for a belt-type continuously variable transmission according to
any one of claims 5 to 8, wherein the first groove (51) and the second grooves (52) are connected to each other.

10. The method for manufacturing a pulley for a belt-type continuously variable transmission according to
any one of claims 5 to 9, wherein a length (52L) of each second groove (52) in the first direction (A1) is longer than a length (51L) of the first groove (51) in the first direction (A1).

11. The method for manufacturing a pulley for a belt-type continuously variable transmission according to
any one of claims 5 to 10, wherein a depth (51d) of the first groove (51) is deeper than a depth (52d) of each second groove (52).

12. The method for manufacturing a pulley for a belt-type continuously variable transmission according to
any one of claims 1 to 11, comprising, after the step (S2, S3) of forming the groove and before the pre-press step (S6), a step (S4) of at least partially plating a portion of the outer circumferential surface (36s) other than the groove (50) without plating an inside of the groove (50) on the outer circumferential surface (36s) of the boss (36A).

13. A belt-type continuously variable transmission (30) comprising a primary pulley (33) supported on a primary shaft (31), a secondary pulley (34) supported on a secondary shaft (32), and a belt (35) wound around the primary pulley (33) and the secondary pulley (34), wherein:
at least one of the primary pulley (33) and the secondary pulley (34) has a cylindrical boss (36A) that extends in a first direction (A1) and a sheave (34A) that extends radially outward from the boss (36A);
a groove (50) is formed on an outer circumferential surface (36s) of the boss (36A), wherein the groove (50) has a first surface (61) that is a slope inclined from the first direction (A1), a second surface (62) that is a slope inclined from a second direction (A2), wherein the second direction (A2) is an opposite direction to the first direction (A1), a third surface (63) that is a slope inclined from a third direction (A3), wherein the third direction (A3) is a circumferential direction along a circumferential surface of the boss, and a fourth surface (64) that is a slope inclined from a fourth direction (A4), wherein the fourth direction (A4) is an opposite direction to the third direction (A3);
the sheave (34A) has a proximal portion (34a) that extends in the first direction (A1), and a main body portion (34b) that is located radially outward relative to the proximal portion (34a) and supports the belt (35);
the proximal portion (34a) of the sheave (34A) comprises a plastically deformed portion (34p, 34q) that is fitted into an inside of the groove (50) of the boss (36A); and
the sheave (34A) and the boss (36A) are joined together through plastic deformation of the proximal portion (34a) of the sheave (34A) forming the plastically deformed portion (34p, 34q) of the proximal portion (34a) of the sheave (34A).

14. The belt-type continuously variable transmission (30) according to claim 13, wherein the first surface (61) is a surface that extends toward the radially outward direction relative to the boss while extending in the first direction (A1), the second surface (62) is a surface that extends toward the radially outward direction while extending in the second direction (A2), the third surface (63) is a surface that extends toward the radially outward direction while extending in the third direction (A3), and the fourth surface (64) is a surface that extends toward the radially outward direction while extending in the fourth direction (A4).

15. A straddle-type vehicle (1) comprising a belt-type continuously variable transmission (30) according to either of claims 13 or 14.

## Patentansprüche

1. Verfahren zum Herstellen einer Riemenscheibe für ein stufenloses Getriebe vom Riementyp, wobei das Verfahren Folgendes umfasst:
einen Schritt (S1) zum Vorbereiten eines zylindrischen Gussvorsprungs (36A), der sich in eine erste Richtung (A1) erstreckt;
einen Schritt (S2, S3) zum Bilden einer Nut (50) auf einer äußeren Umfangsfläche (36s) des Gussvorsprungs (36A), wobei die Nut (50) eine erste Oberfläche (61), welche eine von der ersten Richtung (A1) geneigte Schräge ist, eine zweite Oberfläche (62), welche eine von einer zweiten Richtung (A2) geneigte Schräge ist, wobei die zweite Richtung (A2) eine der ersten Richtung (A1) entgegengesetzte Richtung ist, eine dritte Oberfläche (63), welche eine von einer dritten Richtung (A3) geneigte Schräge ist, wobei die dritte Richtung (A3) eine Umfangsrichtung entlang einer Umfangsfläche des Gussvorsprungs ist, und eine vierte Oberfläche (64) aufweist, welche eine von einer vierten Richtung (A4) geneigte Schräge ist, wobei die vierte Richtung (A4) eine der dritten Richtung (A3) entgegengesetzte Richtung ist;
einen Schritt (S5) zum Vorbereiten einer Rillenscheibe (34A), wobei die Rillenscheibe (34A) einen proximalen Abschnitt (34a), der eine innere Umfangsfläche (34i) und eine äußere Umfangsfläche (34o) aufweist und sich in die erste Richtung (A1) erstreckt, und einen Hauptkörperabschnitt (34b) umfasst, der sich radial auswärts (R1) relativ zu dem proximalen Abschnitt (34a) befindet und dafür konfiguriert ist, einen Riemen (35) zu tragen;
einen Vorpressschritt (S6) zum Ausrichten der inneren Umfangsfläche (34i) des proximalen Abschnitts (34a) der Rillenscheibe (34A) mit der Nut (50) auf der äußeren Umfangsfläche (36s) des Gussvorsprungs (36A); und
einen Schritt (S7) zum Pressen der äußeren Umfangsfläche (34o) des proximalen Abschnitts (34a) der Rillenscheibe (34A) in eine radial nach innen gerichtete Richtung, wodurch der proximale Abschnitt (34a) plastisch verformt wird, bis ein Abschnitt des proximalen Abschnitts (34a) der Rillenscheibe (34A) in die Nut (50) des Gussvorsprungs (36A) eingepasst wird und die Rillenscheibe (34A) mit dem Gussvorsprung (36A) zusammengefügt wird.

2. Verfahren zum Herstellen einer Riemenscheibe für ein stufenloses Getriebe vom Riementyp nach Anspruch 1, wobei die erste Oberfläche (61) eine Oberfläche ist, die sich in die radial nach außen gerichtete Richtung (R1) relativ zu dem Gussvorsprung erstreckt, während sie sich in die erste Richtung (A1) erstreckt, die zweite Oberfläche (62) eine Oberfläche ist, die sich in die radial nach außen gerichtete Richtung (R1) erstreckt, während sie sich in die zweite Richtung (A2) erstreckt, die dritte Oberfläche (63) eine Oberfläche ist, die sich in die radial nach außen gerichtete Richtung (R1) erstreckt, während sie sich in die dritte Richtung (A3) erstreckt, und die vierte Oberfläche (64) eine Oberfläche ist, die sich in die radial nach außen gerichtete Richtung (R1) erstreckt, während sie sich in die vierte Richtung (A4) erstreckt.

3. Verfahren zum Herstellen einer Riemenscheibe für ein stufenloses Getriebe vom Riementyp nach Anspruch 1 oder 2, wobei eine Härte des Gussvorsprungs (36A) größer als eine Härte der Rillenscheibe (34A) ist.

4. Verfahren zum Herstellen einer Riemenscheibe für ein stufenloses Getriebe vom Riementyp nach einem der Ansprüche 1 bis 3, wobei eine Verlängerung eines Materials der Rillenscheibe (34A) größer als eine Verlängerung eines Materials des Gussvorsprungs (36A) ist.

5. Verfahren zum Herstellen einer Riemenscheibe für ein stufenloses Getriebe vom Riementyp nach einem der Ansprüche 1 bis 4, wobei die Nut (50) eine erste Nut (51), die die erste Oberfläche (61) und die zweite Oberfläche (62) aufweist und sich vollständig um die äußere Umfangsfläche (36s) des Gussvorsprungs (36A) erstreckt, und eine Vielzahl von zweiten Nuten (52) umfasst, die die dritte Oberfläche (63) und die vierte Oberfläche (64) aufweisen und in einer Umfangsrichtung entlang der Umfangsfläche des Gussvorsprungs angeordnet sind.

6. Verfahren zum Herstellen einer Riemenscheibe für ein stufenloses Getriebe vom Riementyp nach einem der Ansprüche 1 bis 4, wobei die Nut (50) eine Vielzahl von ersten Nuten (51), die die erste Oberfläche (61) und die zweite Oberfläche (62) aufweisen und in einer Umfangsrichtung angeordnet sind, und eine Vielzahl von zweiten Nuten (52) umfasst, die die dritte Oberfläche (63) und die vierte Oberfläche (64) aufweisen und in einer Umfangsrichtung entlang der Umfangsfläche des Gussvorsprungs angeordnet sind.

7. Verfahren zum Herstellen einer Riemenscheibe für ein stufenloses Getriebe vom Riementyp nach Anspruch 5 oder 6, wobei die zweiten Nuten (52) zu der zweiten Richtung (A2) hin offen sind.

8. Verfahren zum Herstellen einer Riemenscheibe für ein stufenloses Getriebe vom Riementyp nach einem der Ansprüche 5 bis 7, wobei die erste Nut (51) zwischen einer mittleren Position des Gussvorsprungs (36A) in der ersten Richtung (A1) und den zweiten Nuten (52) gebildet ist.

9. Verfahren zum Herstellen einer Riemenscheibe für ein stufenloses Getriebe vom Riementyp nach einem der Ansprüche 5 bis 8, wobei die erste Nut (51) und die zweiten Nuten (52) miteinander verbunden sind.

10. Verfahren zum Herstellen einer Riemenscheibe für ein stufenloses Getriebe vom Riementyp nach einem der Ansprüche 5 bis 9, wobei eine Länge (52L) von jeder zweiten Nut (52) in der ersten Richtung (A1) größer ist als eine Länge (51L) der ersten Nut (51) in der ersten Richtung (A1).

11. Verfahren zum Herstellen einer Riemenscheibe für ein stufenloses Getriebe vom Riementyp nach einem der Ansprüche 5 bis 10, wobei eine Tiefe (51d) der ersten Nut (51) größer als eine Tiefe (52d) jeder zweiten Nut (52) ist.

12. Verfahren zum Herstellen einer Riemenscheibe für ein stufenloses Getriebe vom Riementyp nach einem der Ansprüche 1 bis 11, umfassend, nach dem Schritt (S2, S3) zum Bilden der Nut und vor dem Vorpressschritt (S6) einen Schritt (S4) zum mindestens teilweisen Plattieren eines Abschnitts der äußeren Umfangsfläche (36s), bei dem es sich nicht um die Nut (50) handelt, umfasst, ohne eine Innenseite der Nut (50) auf der äußeren Umfangsfläche (36s) des Gussvorsprungs (36A) zu plattieren.

13. Stufenloses Getriebe vom Riementyp (30), umfassend eine primäre Riemenscheibe (33), die auf einer primären Welle (31) getragen ist, eine sekundäre Riemenscheibe (34), die auf einer sekundären Welle (32) getragen ist, und einen Riemen (35), der um die primäre Riemenscheibe (33) und die sekundäre Riemenscheibe (34) gewunden ist, wobei:
mindestens eine von der primären Riemenscheibe (33) und der sekundären Riemenscheibe (34) einen zylindrischen Gussvorsprung (36A), der sich in eine erste Richtung (A1) erstreckt, und eine Rillenscheibe (34A) aufweist, die sich radial von dem Gussvorsprung (36A) nach außen erstreckt;
eine Nut (50) auf einer äußeren Umfangsfläche (36s) des Gussvorsprungs (36A) gebildet ist, wobei die Nut (50) eine erste Oberfläche (61), welche eine von der ersten Richtung (A1) geneigte Schräge ist, eine zweite Oberfläche (62), welche eine von einer zweiten Richtung (A2) geneigte Schräge ist, wobei die zweite Richtung (A2) eine der ersten Richtung (A1) entgegengesetzte Richtung ist, eine dritte Oberfläche (63), welche eine von einer dritten Richtung (A3) geneigte Schräge ist, wobei die dritte Richtung (A3) eine Umfangsrichtung entlang einer Umfangsfläche des Gussvorsprungs ist, und eine vierte Oberfläche (64) aufweist, welche eine von einer vierten Richtung (A4) geneigte Schräge ist, wobei die vierte Richtung (A4) eine der dritten Richtung (A3) entgegengesetzte Richtung ist;
die Rillenscheibe (34A) einen proximalen Abschnitt (34a), der sich in die erste Richtung (A1) erstreckt, und einen Hauptkörperabschnitt (34b) aufweist, der sich relativ zu dem proximalen Abschnitt (34a) radial auswärts befindet und den Riemen (35) trägt;
der proximale Abschnitt (34a) der Rillenscheibe (34A) einen plastisch verformten Abschnitt (34p, 34q) umfasst, der in eine Innenseite der Nut (50) des Gussvorsprungs (36A) eingepasst ist; und
die Rillenscheibe (34A) und der Gussvorsprung (36A) durch plastische Verformung des proximalen Abschnitts (34a) der Rillenscheibe (34A) zusammengefügt werden, wodurch der plastisch verformte Abschnitt (34p, 34q) des proximalen Abschnitts (34a) der Rillenscheibe (34A) gebildet wird.

14. Stufenloses Getriebe vom Riementyp (30) nach Anspruch 13, wobei die erste Oberfläche (61) eine Oberfläche ist, die sich in die radial nach außen gerichtete Richtung relativ zu dem Gussvorsprung erstreckt, während sie sich in die erste Richtung (A1) erstreckt, die zweite Oberfläche (62) eine Oberfläche ist, die sich in die radial nach außen gerichtete Richtung erstreckt, während sie sich in die zweite Richtung (A2) erstreckt, die dritte Oberfläche (63) eine Oberfläche ist, die sich in die radial nach außen gerichtete Richtung erstreckt, während sie sich in die dritte Richtung (A3) erstreckt, und die vierte Oberfläche (64) eine Oberfläche ist, die sich in die radial nach außen gerichtete Richtung erstreckt, während sie sich in die vierte Richtung (A4) erstreckt.

15. Fahrzeug vom Aufsitz-Typ (1), umfassend ein stufenloses Getriebe vom Riementyp (30) nach einem der Ansprüche 13 oder 14.

## Revendications

1. Procédé de fabrication d'une poulie pour une transmission à variation continue de type à courroie, le procédé comprenant :
une étape (S1) consistant à préparer un bossage cylindrique (36A) s'étendant dans une première direction (A1) ;
une étape (S2, S3) consistant à former une cannelure (50) sur une surface circonférentielle extérieure (36s) du bossage (36A), dans lequel la cannelure (50) présente une première surface (61) qui est une pente inclinée depuis la première direction (A1), une deuxième surface (62) qui est une pente inclinée depuis une deuxième direction (A2), dans lequel la deuxième direction (A2) est une direction opposée à la première direction (A1), une troisième surface (63) qui est une pente inclinée depuis une troisième direction (A3), dans lequel la troisième direction (A3) est une direction circonférentielle le long d'une surface circonférentielle du bossage, et une quatrième surface (64) qui est une pente inclinée depuis une quatrième direction (A4), dans lequel la quatrième direction (A4) est une direction opposée à la troisième direction (A3) ;
une étape (S5) consistant à préparer une poulie (34A), dans lequel la poulie (34A) comprend une partie proximale (34a) qui présente une surface circonférentielle intérieure (34i) et une surface circonférentielle extérieure (34o) et s'étend dans la première direction (A1), et une partie de corps principal (34b) qui est située de manière radiale vers l'extérieur (R1) relativement à la partie proximale (34a) et configurée pour supporter une courroie (35) ;
une étape de pré-compression (S6) consistant à aligner la surface circonférentielle intérieure (34i) de la partie proximale (34a) de la poulie (34A) avec la cannelure (50) sur la surface circonférentielle extérieure (36s) du bossage (36A) ; et
une étape (S7) consistant à comprimer la surface circonférentielle extérieure (34o) de la partie proximale (34a) de la poulie (34A) vers une direction radialement vers l'intérieur, la partie proximale (34a) étant ainsi plastiquement déformée jusqu'à ce qu'une partie de la partie proximale (34a) de la poulie (34A) soit insérée dans la cannelure (50) du bossage (36A) et que la poulie (34A) soit jointe au bossage (36A).

2. Procédé de fabrication d'une poulie pour une transmission à variation continue de type à courroie selon la revendication 1, dans lequel la première surface (61) est une surface qui s'étend vers la direction radialement vers l'extérieur (R1) relativement au bossage, tout en s'étendant dans la première direction (A1), la deuxième surface (62) est une surface qui s'étend vers la direction radialement vers l'extérieur (R1) tout en s'étendant dans la deuxième direction (A2), la troisième surface (63) est une surface qui s'étend vers la direction radialement vers l'extérieur (R1) tout en s'étendant dans la troisième direction (A3), et la quatrième surface (64) est une surface qui s'étend vers la direction radialement vers l'extérieur (R1) tout en s'étendant dans la quatrième direction (A4).

3. Procédé de fabrication d'une poulie pour une transmission à variation continue de type à courroie selon la revendication 1 ou 2, dans lequel une dureté du bossage (36A) est supérieure à une dureté de la poulie (34A).

4. Procédé de fabrication d'une poulie pour une transmission à variation continue de type à courroie selon l'une quelconque des revendications 1 à 3, dans lequel un allongement d'un matériau de la poulie (34A) est supérieur à un allongement d'un matériau du bossage (36A).

5. Procédé de fabrication d'une poulie pour une transmission à variation continue de type à courroie selon l'une quelconque des revendications 1 à 4, dans lequel la cannelure (50) comprend une première cannelure (51) qui présente la première surface (61) et la seconde surface (62) et s'étend totalement autour de la surface circonférentielle extérieure (36s) du bossage (36A), et une pluralité de secondes cannelures (52) qui présentent la troisième surface (63) et la quatrième surface (64) et sont agencées dans une direction circonférentielle le long de la surface circonférentielle du bossage.

6. Procédé de fabrication d'une poulie pour une transmission à variation continue de type à courroie selon l'une quelconque des revendications 1 à 4, dans lequel la cannelure (50) comprend une pluralité de premières cannelures (51) qui présentent la première surface (61) et la deuxième surface (62) et sont agencées dans une direction circonférentielle, et une pluralité de secondes cannelures (52) qui présentent la troisième surface (63) et la quatrième surface (64) et sont agencées dans une direction circonférentielle le long de la surface circonférentielle du bossage.

7. Procédé de fabrication d'une poulie pour une transmission à variation continue de type à courroie selon l'une quelconque des revendications 5 ou 6, dans lequel les secondes cannelures (52) sont ouvertes vers la deuxième direction (A2).

8. Procédé de fabrication d'une poulie pour une transmission à variation continue de type à courroie selon l'une quelconque des revendications 5 à 7, dans lequel la première cannelure (51) est formée entre une position centrale du bossage (36A) dans la première direction (A1) et les secondes cannelures (52).

9. Procédé de fabrication d'une poulie pour une transmission à variation continue de type à courroie selon l'une quelconque des revendications 5 à 8, dans lequel la première cannelure (51) et les secondes cannelures (52) sont connectées les unes aux autres.

10. Procédé de fabrication d'une poulie pour une transmission à variation continue de type à courroie selon l'une quelconque des revendications 5 à 9, dans lequel une longueur (52L) de chaque seconde cannelure (52) dans la première direction (A1) est supérieure à une longueur (51L) de la première cannelure (51) dans la première direction (A1).

11. Procédé de fabrication d'une poulie pour une transmission à variation continue de type à courroie selon l'une quelconque des revendications 5 à 10, dans lequel une profondeur (51d) de la première cannelure (51) est supérieure à une profondeur (52d) de chaque seconde cannelure (52).

12. Procédé de fabrication d'une poulie pour une transmission à variation continue de type à courroie selon l'une quelconque des revendications 1 à 11, comprenant, après l'étape (S2, S3) de formation de la cannelure et avant l'étape de pré-compression (S6), une étape (S4) consistant à plaquer au moins partiellement une partie de la surface circonférentielle extérieure (36s) autre que la cannelure (50) sans plaquer une partie intérieure de la cannelure (50) sur la surface circonférentielle extérieure (36s) du bossage (36A).

13. Transmission à variation continue de type à courroie (30) comprenant une poulie primaire (33) supportée sur un arbre primaire (31), une poulie secondaire (34) supportée sur un arbre secondaire (32), et une courroie (35) enroulée autour de la poulie primaire (33) et la poulie secondaire (34), dans laquelle :
au moins un élément de la poulie primaire (33) et de la poulie secondaire (34) présente un bossage cylindrique (36A) qui s'étend dans une première direction (A1) et une poulie (34A) qui s'étend de manière radiale vers l'extérieur depuis le bossage (36A) ;
une cannelure (50) est formée sur une surface circonférentielle extérieure (36s) du bossage (36A) dans laquelle la cannelure (50) présente une première surface (61) qui est une pente inclinée depuis la première direction (A1), une deuxième surface (62) qui est une pente inclinée depuis une deuxième direction (A2), dans laquelle la deuxième direction (A2) est une direction opposée à la première direction (A1), une troisième surface (63) qui est une pente inclinée depuis une troisième direction (A3), dans laquelle la troisième direction (A3) est une direction circonférentielle le long d'une surface circonférentielle du bossage, et une quatrième surface (64) qui est une pente inclinée depuis une quatrième direction (A4), dans laquelle la quatrième direction (A4) est une direction opposée à la troisième direction (A3) ;
la poulie (34A) présente une partie proximale (34a) qui s'étend dans la première direction (A1), et une partie de corps principal (34b) qui est située de manière radiale vers l'extérieur par rapport à la partie proximale (34a) et supporte la courroie (35) ;
la partie proximale (34a) de la poulie (34A) comprend une partie plastiquement déformée (34p, 34q) qui est insérée dans une partie intérieure de la cannelure (50) du bossage (36A) ; et
la poulie (34A) et le bossage (36A) sont joints ensemble par une déformation plastique de la partie proximale (34a) de la poulie (34A) formant ainsi la partie plastiquement déformée (34p, 34q) de la partie proximale (34a) de la poulie (34A).

14. Transmission à variation continue de type à courroie (30) selon la revendication 13, dans laquelle la première surface (61) est une surface qui s'étend vers la direction radialement vers l'extérieur relativement au bossage tout en s'étendant dans la première direction (A1), la deuxième surface (62) est une surface qui s'étend vers la direction radialement vers l'extérieur tout en s'étendant dans la deuxième direction (A2), la troisième surface (63) est une surface qui s'étend vers la direction radialement vers l'extérieur (A3) tout en s'étendant dans la troisième direction (A3), et la quatrième surface (64) est une surface qui s'étend vers la direction radialement vers l'extérieur tout en s'étendant dans la quatrième direction (A4).

15. Véhicule de type à fourche (1) comprenant une transmission à variation continue de type à courroie (30) selon l'une quelconque des revendications 13 ou 14.
